(19) **Europäisches Patentamt**
**European Patent Office**
**Office européen des brevets**

(11) **EP 2 475 091 A1**

(12) **EUROPEAN PATENT APPLICATION**

(43) Date of publication:
**11.07.2012 Bulletin 2012/28**

(51) Int Cl.:
**H02M 7/5387** (2007.01)

(21) Application number: **11150371.0**

(22) Date of filing: **07.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **PL Technologies AG**
**8834 Schindellegi (CH)**

(72) Inventor: **Bader, Michael**
**8820, Wädenswil (CH)**

(74) Representative: **Dreiss**
**Patentanwälte**
**Postfach 10 37 62**
**70032 Stuttgart (DE)**

(54) **Modulator for capacitive loads comprising a series resonance circuit and corresponding method**

(57)    A modulator for supplying energy to a capacitive load ($C_{load}$, $R_{load}$) from a DC input voltage ($V_1$) in a switched manner is disclosed, which exhibits reduced losses as compared to classical modulators with resistive current limitation. The modulator comprises a first half-bridge connected to the input voltage, the first half-bridge comprising two switching elements ($S_1$, $S_2$) connected in series and defining a first common node, and a second half-bridge connected to the input voltage, the second half bridge comprising two diodes ($D_3$, $D_4$) connected in series and defining a second common node. An inductor ($L_1$) is connected between the first common node and the second common node, and the capacitive load is connected between the second common node and the second input terminal. The inductors and the capacitive load form a series resonance circuit. The inductor acts to limit the initial current during charging and discharging of the load, while the diodes redirect the inductor current at the end of the charging and discharging events. A further reduction of losses is possible by employing two further switching elements ($S_3$, $S_4$) in parallel to or instead of the diodes ($D_3$, $D_4$).

**FIG. 4**

EP 2 475 091 A1

**Description**

TECHNICAL FIELD

The present invention relates to a modulator for connecting a capacitive load to a voltage source in a switched manner, and to a corresponding method.

PRIOR ART

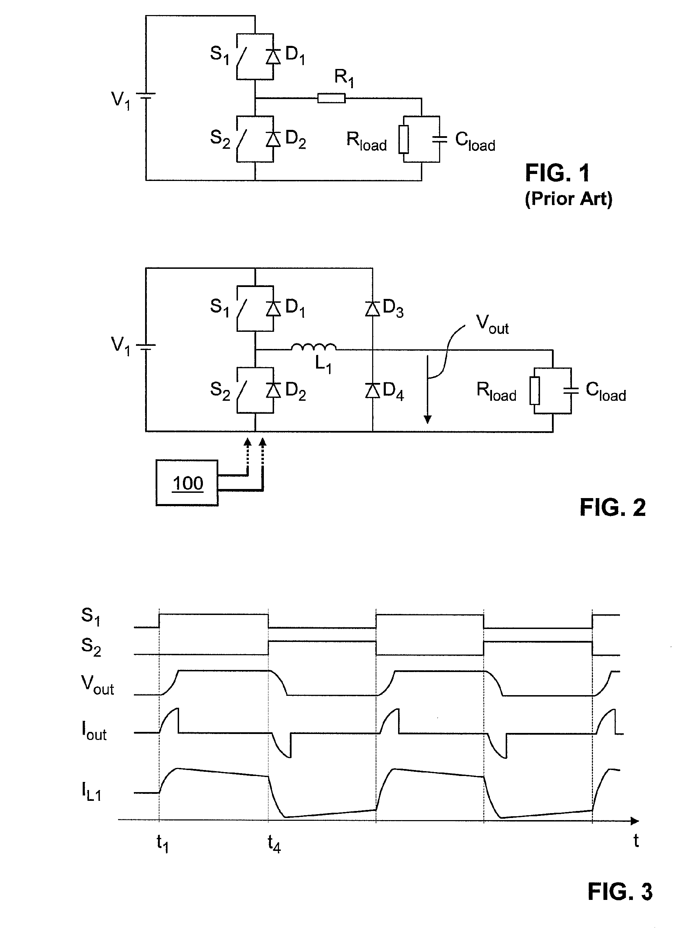

Classical square modulators are often realized with a push-pull output. An example is shown in Fig. 1. A half-bridge comprising an upper switch $S_1$ and a lower switch $S_2$ is connected between the positive pole of a voltage source and ground. The voltage source supplies a DC input voltage $V_1$. A capacitive load, here symbolized by a resistance $R_{load}$ and a capacitance $C_{load}$ connected in parallel, is connected between the common node of the two switches and ground via a series resistor $R_1$. The resistor $R_1$ acts to limit the current flowing into the capacitive load. If the effect of the load resistance $R_{load}$ is neglected, the time-averaged losses in the resistor $R_1$ can be calculated as follows:

$$(\text{Eq. 1}) \qquad P_v = V^2 \cdot f \cdot C_{load},$$

where f is the modulation frequency and V is the voltage to which the load capacitance is charged in each cycle. If the cycle time T = 1/f is much longer than the time constant $\tau$ = RC, V can be approximated by the supply voltage $V_1$. The losses can be considerable in applications where the supply voltage $V_1$ and/or the frequency f are large.

By the way of example, one may consider the anode-collector path or the body-collector path of a gyrotron. This path can be modeled by an RC parallel circuit similar to the circuit of Fig. 1. Typical values are, e.g., $V_1$ = 40 kV, f = 5 kHz, $C_{load}$ = 3 nF, and $R_{load}$ = 1 MΩ. Application of Equation (1) leads to a power loss of approximately 24 kW. Such high power losses are very difficult to handle and result in a very low efficiency of the modulator.

SUMMARY OF THE INVENTION

It is an object of the present invention to provide a modulator for capacitive loads which exhibits reduced power losses and improved efficiency. This object is achieved by a modulator having the features of claim 1. Advantageous embodiments of the invention are laid down in the dependent claims.

The present invention provides a modulator for supplying energy to a substantially capacitive load from a DC input voltage in a switched manner, the modulator comprising:

a first input terminal and a second input terminal for connecting the modulator to the DC input voltage;
a first half-bridge connected between said first and second input terminals, the first half-bridge comprising a first switching element and a second switching element connected in series and defining a first common node;
a second half-bridge connected between said first and second input terminals, the second half bridge comprising a first diode and a second diode connected in series and defining a second common node, both diodes being connected in reverse direction (in other words, being reverse-biased) relative to the DC input voltage; and
an inductor connected between the first common node and the second common node.

The capacitive load may then be connected to the second common node, in particular, between the second common node and the second input terminal, and correspondingly, the second common node and the second input terminal may act as the output terminals of the modulator. This connection may involve further switches. In particular, the load may be connected between the second common node and a third common node of a third half-bridge connected between the first and second input terminals.

In the context of the present invention, a capacitive load is to be understood as a load for which the average capacitive energy stored in the load exceeds the average inductive energy, and for which reactive power exceeds real power, at typical operating frequencies of the modulator. This frequency depends on the actual application of the modulator. Typical frequencies are in the 1-100 kHz range. When subjected to a step voltage, such a load typically draws a current with a very sharp initial rise and a subsequent slower decrease over time, when viewed on the time scale of the cycle time. Specifically, in the context of the present invention a load may be considered to be "capacitive" if the load and the inductor, when connected in series, form an underdamped LC resonance circuit whose inductance is essentially identical with the inductance value of the inductor of the modulator, i.e., any stray inductances of the load are much smaller than the inductance value of the inductor, and all ohmic resistances of the load are such that they do not lead to critical damping.

A "switching element" or a "switch" is to be understood as any element capable of actively switching between an essentially conducting and an essentially non-conducting state by application of a control signal. In the context of the present invention, a switching element will usually be implemented as a semiconductor switch, e.g., a MOSFET or an IGBT. Each of the first and second switching element will often be provided with a freewheeling diode connected in parallel with the respective switching element, the freewheeling diodes being connected in reverse direction relative to the DC input voltage. Such freewheeling diodes need not be separate physical structures, but may be fully integrated with the switching element. While freewheeling diodes are clearly preferable in practical terms, they are not absolutely necessary.

The terms "connected to" and "connected between" are to be understood to define a connection either by a low-ohmic conductor with negligible stray capacitance and negligible stray inductance, or a connection by any other structure which substantially does not alter the function of the circuit as compared to a direct connection (e.g., a connection via an EMF snubber, via a resistance that will not change the overall behavior of the circuit, or via some further closed switching elements).

The terms "input terminal" and "output terminal" are to be understood in a manner that they do not necessarily imply a separate physical structure such as a separate connector. By the way of example, any conductor directly connected to a DC voltage source which supplies the DC input voltage may be identified with the input terminal.

The modulator is used to supply energy to the load and to remove energy from the load in the following manner: At the beginning of a cycle, the second switching element is open, and the first switching element is closed. In this manner, the series circuit formed by the inductor and the load is subjected to the input voltage, and consequently a current starts to build up in the series circuit, to charge the load capacitance through the inductor while the inductor acts to limit the rate of the current rise. In this phase, energy is transferred from the voltage source to the load. When the voltage at the second common node exceeds the input voltage, the first diode will become conducting. The current carried by the inductor is thus redirected and recycled through the first diode and the first switching element, causing the inductive energy to be slowly dissipated in these elements, while the voltage at the load remains close to the input voltage.

When the load capacitance is to be discharged again (i.e., energy is to be removed from the load again), the first switching element is opened, and the second switching element is closed simultaneously with the opening of the first switching element or — under the condition that the switching elements are provided with freewheeling diodes — at some time thereafter. The remaining inductive energy stored in the inductor is now rapidly transferred back into the voltage source through the first diode and the second switching element or its associated freewheeling diode. When the energy in the inductor approaches zero, the first diode becomes nonconducting again. A recycle current now flows from the load capacitance through the inductor and the second switching element, causing energy to be transferred from the load capacitance to the inductor. In this process, the inductor again limits the rate of the current rise. When the voltage at the second common node starts to become negative, the second diode becomes conducting, and the current in the inductor will be redirected and recycled through the second switching element and the second diode, causing the inductive energy to be slowly dissipated in these elements, while the load will remain at close to zero voltage.

The inductor thus acts to limit the rate of current changes during the charging and discharging events, while the diodes redirect the inductor current at the end of the charging and discharging events. In this manner, ohmic losses occur mainly at the switching elements and diodes. These losses are much reduced as compared to the prior-art solution.

Preferably, the modulator further comprises a controller for controlling the switching elements in the above-mentioned manner. The controller is then configured to carry out a switching sequence comprising the following states:

> first switching element closed and second switching element open, to supply a current to the capacitive load through the inductor; and
> second switching element closed and first switching element open, to discharge the capacitive load through the inductor.

To reach the first state, the second switching element may be opened essentially simultaneously with the closing of the first switching element, or, if the switching elements are provided with freewheeling diodes, already somewhat earlier. Likewise, for reaching the second state, the first switching element may be opened essentially simultaneously with the closing of the second switching element, or, if the switching elements are provided with freewheeling diodes, already somewhat earlier. The controller can be implemented in hardware or, in conjunction with a processor, in software.

An even more efficient switching sequence with even lower losses can be implemented if the first diode is coupled in parallel with or replaced by a third switching element, and if the second diode is coupled in parallel with or replaced by a fourth switching element. The modulator can then be operated with a switching sequence comprising the following states:

> (a) second, third and fourth switching elements open and first switching element closed, to charge the capacitive load through the inductor;
> (b) fourth switching element open, at least one of the first and second switching elements open, and third switching element closed, to connect the load to the input voltage while bypassing the inductor;
> (c) first, third and fourth switching elements open and second switching element closed, to discharge the capacitive load through the inductor and through the second switching element;
> (d) third switching element open, at least one of the first and second switching elements open, and fourth switching element closed, to substantially short-circuit the load through the fourth switching element.

These states are preferably passed through in the above order. Additional states may be present between these states.

Preferably all switching elements are provided with a freewheeling diode coupled in parallel with the respective switching element, these diodes being reverse-biased with respect to the input voltage.

In order to de-energize the inductor more rapidly after the inductor current has been redirected, the controller may be configured to open the first switching element prior to state (b), at the beginning of state (b), or during state (b). The inductor current will then be recycled through the third switching element or its freewheeling diode, through the voltage source, and through the second switching element or its freewheeling diode, and thus the inductor will be de-energized under action of the inverse input voltage, i.e., the inductive energy stored in the inductor will be transferred back into the voltage source. If the switching elements are provided with freewheeling diodes, the second switching element may be kept open while the inductor is de-energized; in particular, all four switching elements may be open between states (a) and (b). It may however be advantageous to close the second and third switching elements while the inductor is de-energized in order to reduce the forward voltage across the diodes.

Similarly, the controller may be configured to open the second switching element prior to state (d), at the beginning of state (d), or during state (d) to de-energize the inductor under action of the input voltage, i.e., to remove the energy accumulated in step (c) from the inductor.

In a second aspect, the present invention provides a method of supplying energy to a substantially capacitive load, the method comprising:

> (i) connecting an inductor in series with the load to provide a series resonance circuit;
> (ii) at a first predetermined point in time, applying an input voltage to said series resonance circuit to supply a current to the inductor and the load;
> (iii) when the voltage across the load exceeds a first predetermined voltage (which preferably is essentially identical to the input voltage), redirecting at least a portion of the inductor current away from the load to keep the load essentially at the first predetermined voltage.

Preferably, for removing energy from the load, the method further comprises:

> (iv) at a second predetermined point in time, discharging the load through the inductor;
> (v) when the voltage across the load falls below a predetermined voltage lower than the first predetermined voltage (in particular, when the voltage across the load becomes negative), redirecting at least a portion of the inductor current away from the load to keep the voltage across the load essentially at the second predetermined voltage (in particular, essentially at zero voltage).

In this method, in step (ii) the series circuit may be connected to the input voltage by closing a first switching element, and in step (iv) the load may be discharged through the inductor by closing a second switching element which substantially short-circuits the series circuit.

In step (iii) the inductor current may be redirected away from the load through a first diode, which enters its conducting state due to the voltage across the load reaching or exceeding the first predetermined voltage, and in step (v) the inductor current may be redirected away from the load through a second diode, which enters its conducting state due to the voltage across the load falling below the second predetermined voltage, in particular, becoming negative. The first and second diodes will then be reverse-biased during steps (ii) and (iv).

In addition to or instead of using diodes for redirecting the inductor current, in step (iii) a third switching element may be closed to connect the load to the first predetermined voltage. Likewise, in step (v) a fourth switching element may be closed to connect the load to the second predetermined voltage, in particular, to substantially short-circuit the load.

Preferably, in step (iii) the inductor is de-energized under action of the inverse input voltage, and in step (v) the inductor is de-energized under action of the input voltage.

In advantageous applications, the load may comprise a control electrode of a vacuum tube, in particular, the anode-collector path or the body-collector path of a klystron or gyrotron. However, the present invention is by no means limited to such applications, and may be advantageously employed in any situation where resistive losses are to be minimized, in particular, in applications where the input voltage exceeds a few hundred volts, e.g., at input voltages above 1 kV.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows a circuit diagram illustrating a prior-art modulator;

Fig. 2     shows a circuit diagram of a modulator according to a first embodiment of the present invention;

Fig. 3     shows an exemplary timing diagram for the modulator of Fig. 2;

Fig. 4     shows a circuit diagram of a modulator according to a second embodiment of the present invention;

Fig. 5 shows an exemplary timing diagram for the modulator of Fig. 4; and

Fig. 6 illustrates the application of a modulator according to the invention with a gyrotron.

DESCRIPTION OF PREFERRED EMBODIMENTS

Figure 2 illustrates a first embodiment of a modulator according to the present invention. The modulator is connected to a voltage source supplying an input voltage $V_1$ to the modulator. A first and a second half-bridge are connected between the positive pole of the voltage source and its negative pole, which here is identified with ground. The first half-bridge comprises a first switch $S_1$ with parallel-coupled freewheeling diode $D_1$ and a second switch $S_2$ with parallel-coupled freewheeling diode $D_2$, the switches being connected in series at a first common node. The second half-bridge comprises a first diode $D_3$ and a second diode $D_4$, connected in series at a second common node, both diodes being connected in reverse direction relative to the input voltage $V_1$. An inductor $L_1$ is connected between the first and the second common node. A capacitive load, symbolized by a load capacitance $C_{load}$ and a load resistance $R_{load}$ coupled in parallel, is connected between the second common node and ground. The voltage across the load is designated as the output voltage $V_{out}$. The switches $S_1$ and $S_2$ are driven by a control unit 100 providing corresponding digital control signals for the switches.

Operation of the modulator of Fig. 2 is best understood with reference to Fig. 3, which schematically illustrates a possible switching sequence of the switches $S_1$ and $S_2$, together with the output voltage $V_{out}$, the current through the load $I_{out}$, and the current through the inductor, $I_{L1}$. Two points in time are particularly marked on the time axis t and are designated as $t_1$ and $t_4$. For the following discussion, the load resistance $R_{load}$ is neglected, i.e., it is assumed to be infinite; however, the discussion will remain essentially the same as long as the load resistance is reasonably large, such that the load and the inductor form an underdamped resonance circuit.

Before time $t_1$, both switches are open, and the output voltage and output current are zero. Both diodes $D_1$ and $D_2$ are non-conducting. At time $t_1$, switch $S_1$ is closed. The load and the inductor form an underdamped resonance circuit. Accordingly, a forward current $I_{out}$ starts to flow through both the inductor and the load, and an output voltage $V_{out}$ starts to build up across the load in a phase-shifted manner, which is characteristic of such a resonance circuit. When the output voltage $V_{out}$ starts to exceed the input voltage $V_1$, the diode $D_3$ becomes conducting, and the output voltage $V_{out}$ is thus clamped at the input voltage $V_1$ plus the forward voltage of diode $D_3$. The inductor current $I_{L1}$ is now redirected through diode $D_3$, and the load current $I_{out}$ suddenly drops to zero. The inductor current $I_{L1}$ is recycled through switch $S_1$. Since some energy is dissipated due to losses in diode $D_3$ and switch $S_1$, the current will slowly decrease.

At time $t_4$, switch $S_1$ is opened, and switch $S_2$ is closed. The inductor current now flows through $D_3$, through the voltage source and through switch $S_2$. This causes the remaining energy stored in the inductor to be transferred back into the voltage source, until the inductor current $I_{L1}$ reaches zero. At this point in time, the diode $D_3$ will become non-conducting again, and the load will start to discharge through the inductor and switch $S_2$, causing a reverse current to build up in the inductor in the characteristic manner of an underdamped resonance circuit. When the voltage across the load starts to become negative, diode $D_4$ will become conducting. This causes the load to be clamped essentially at zero voltage (to be precise, at the forward voltage of diode $D_4$). The inductor current is now recycled through switch $S_2$ and diode $D_4$, bypassing the load, and the load current suddenly drops to zero.

At the beginning of the next cycle, switch $S_2$ is opened again, and switch $S_1$ is closed. The remaining reverse inductor current will now flow through switch $S_1$, through the voltage source and through diode $D_4$, causing the remaining energy stored in the inductor to be transferred back into the voltage source. When the current reaches zero, diode $D_4$ will become non-conducting again, and the cycle continues in the same manner as at time $t_1$ described above.

The inductance $L_1$ should be chosen such that the resonance frequency of the resonance circuit formed by the inductor $L_1$ and the load is higher, but preferably still on the same order of magnitude, than the switching frequency for which the modulator is designed, so as to ensure that the charging and discharging events are complete in each cycle. For switching frequencies in the range below 100 kHz, typical values will be in the range of 10 $\mu$H to 100 mH, depending on the capacitance of the load. The capacitance of the load will typically be in the range of at least about 0.1 nF, often even at least about 1 nF.

In summary, in the modulator of the present invention the changes of the load current during charging and discharging events is limited by an inductor rather than by an ohmic resistor. In this manner, losses can be substantially reduced as compared to the classical push-pull modulator of Fig. 1. Since there are substantial periods of time during which the inductor current is recycled through switches and diodes, there may however still be appreciable losses caused by energy dissipation in these elements. In high-power applications such as in a klystron or gyrotron, these losses might still be on the order of several kilowatts, which may be more than what can be handled by presently available switching elements or diodes.

In order to minimize such losses, switch $S_1$ may in principle be opened already well before switch $S_2$ is closed, and switch $S_2$ may be opened already well before switch $S_1$ is closed. However, this will cause the voltage across the load to be undefined while both switches are open as soon as the diodes $D_3$ and $D_4$, respectively, enter

their non-conducting state. If the load resistance is not negligible, this will cause the voltage across the load to slowly drop between times $t_1$ and $t_4$, which may be undesired. Likewise, if charges should for some reason accumulate on the load capacitance after the load has been discharged, these charges cannot be efficiently dissipated any more once both switches are open and the diodes have entered their non-conducting state. Despite the lower losses, this mode of operation may therefore be undesired. In principle, these disadvantages may be alleviated by providing a sensor that measures the voltage across the load; the controller may then receive the sensor signals and may selectively close switch $S_1$ if the voltage across the load has dropped to a level that is lower than desired, and selectively close switch $S_2$ if the voltage across the load is higher than desired.

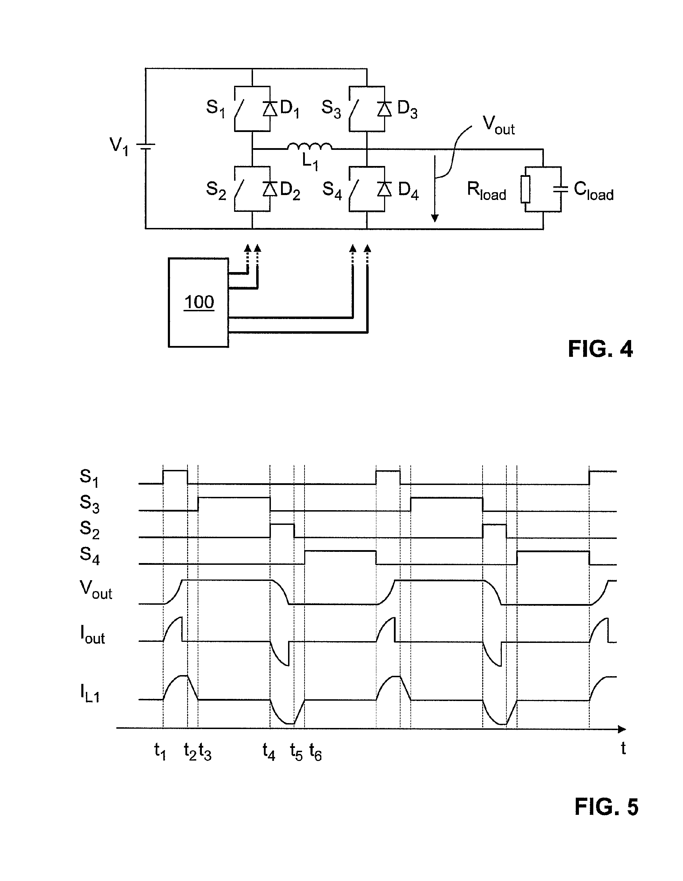

The disadvantages of the first embodiment are altogether avoided by the second embodiment of a modulator according to the present invention, which is illustrated in Fig. 4. In this topology, additional switches $S_3$ and $S_4$ are provided in parallel to the diodes $D_3$ and $D_4$. A possible switching sequence is illustrated in Fig. 5. Initially, all switches are open. At time $t_1$, switch $S_1$ is closed. Like in the first embodiment, a current builds up in the resonance circuit formed by the inductance $L_1$ and the load. When the output voltage $V_{out}$ starts to exceed the input voltage $V_1$, diode $D_3$ enters its conducting state, and the inductor current $I_{L1}$ is recycled through diode $D_3$ and switch $S_1$ while the load current drops to zero, as in the first embodiment. At time $t_2$, switch $S_1$ is opened. The inductor current now flows through diode $D_3$, through the voltage source $V_1$ and diode $D_2$, causing the energy stored in the inductor to be rapidly transferred back into the voltage source. When the inductor current reaches zero at time $t_3$ (or at any time before this is the case), switch $S_3$ is closed to directly connect the load to the voltage source. In this manner, the load remains at a defined voltage even when diode $D_3$ enters its non-conducting state again.

When the load is to be discharged again, switch $S_3$ is opened, and switch $S_2$ is closed at time $t_4$. A reverse current now starts to build up through the load and the inductor, as in the first embodiment, until the voltage across the load drops below zero, which causes diode $D_4$ to enter its conducting state. At time $t_5$, switch $S_2$ is opened, and the inductor current is now recycled through diode $D_1$, through the voltage source and through diode $D_4$, causing the energy stored in the inductor to be rapidly transferred back into the voltage source. When the inductor current reaches zero at time $t_6$ (or at any time before this is the case), switch $S_4$ is closed to short-circuit the load, so as to ensure that any external charges which might accumulate in the load capacitance are rapidly dissipated.

As will be readily apparent from a comparison of the current diagrams in Figures 3 and 5, the times during which a recycled inductor current is present are much reduced in the second embodiment as compared to the first embodiment, while it can be ensured that the load is always at a defined voltage level between the charging and discharging events.

Several variations of the switching sequence of Fig. 5 are possible without affecting the working principle of the sequence. In particular, switch $S_2$ can be closed between times $t_2$ and $t_3$ until the inductor $L_1$ has been fully de-energized, to reduce the forward voltage of diode $D_2$ during flow of the recycle current of the inductor. For the same reason, switch $S_3$ can be closed already at any time after the output voltage has reached the input voltage and $D_3$ has entered its conducting state. It is also possible to de-energize the inductor $L_1$ only later by keeping $S_1$ closed even after switch $S_3$ has been closed, provided that switch $S_2$ remains open; however, since this will cause energy to be dissipated in $S_1$ and $D_3$ and/or $S_3$, it is generally undesirable to keep the inductor energized for a longer time than necessary. In a similar spirit, when the load has been discharged and diode $D_4$ has entered its conducting state at time $t_5$, switch $S_1$ may be closed until the inductor has been de-energized, to reduce the forward voltage of diode $D_1$ during flow of the recycle current of the inductor. Likewise, switch $S_4$ may be closed already at any time after the output voltage has reached zero and diode $D_4$ has entered its conducting state, to reduce the forward voltage of diode $D_4$ during flow of the recycle current of the inductor. Again, it is possible to de-energize the inductor only well after switch $S_4$ has been closed by keeping $S_2$ closed, even though this may be undesirable.

In these schemes, switches $S_3$ and $S_4$ are always switched at essentially zero voltage and, if the scheme of Fig. 5 is applied, also at zero current. This imposes relatively low voltage and current handling requirements on these switches. On the other hand, switches $S_1$ and $S_2$ are generally switched at substantial voltages (essentially at the input voltage) and must be able to carry considerable currents up to the maximum output current. Therefore, much higher requirements are imposed on these switches than on switches $S_3$ and $S_4$.

Several variations of the modulator design are possible. In particular, the load may also be connected between the positive pole of the input voltage and the second common node. The switching sequence would have to be correspondingly adapted. It is also possible to connect the load between the second common node and the common node of another half-bridge, in order to be able to apply either a positive or a negative voltage to the load.

In order to ensure that no switches are closed or opened too early or too late, in all embodiments the modulator may comprise one or more of the following sensors: an output voltage sensor for determining the output voltage across the load; a load current sensor for determining the load current; an inductor current sensor for determining the inductor current; an inductor voltage sensor for determining the inductor voltage; and voltage and/or current sensors associated with each switching element to determine the voltage across each switching element and/or the current through each switching element. These sensors then cooperate with the control unit 100, which derives driving signals for the switches from a predetermined timing protocol in conjunction with the sensor signals, to ensure that the above switching sequence is correctly timed.

In a practical application, the modulator according to the present invention may be employed to modulate the body-collector voltage or the anode-collector voltage of a gyrotron. A gyrotron typically comprises an electron gun, an acceleration chamber, a resonance cavity immersed in a strong magnetic field, and an electron collector. An electron beam is accelerated to relativistic energies and subjected to the magnetic field. The electrons gyrate around the magnetic field lines and emit electromagnetic radiation. By interaction of the relativistic electrons with the radiation field, amplification of the electromagnetic radiation occurs. Gyrotrons are as such well known and are available commercially from a variety of manufacturers.

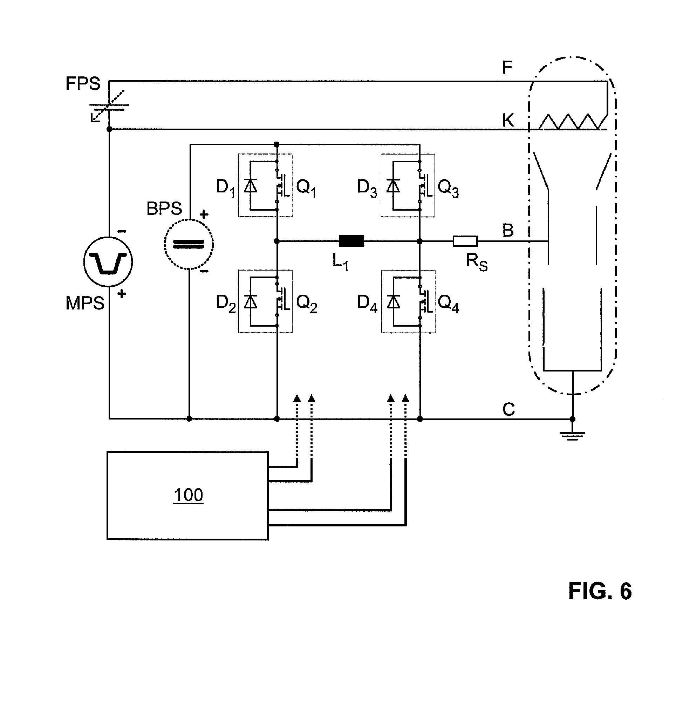

A gyrotron, together with a typical configuration of its power supplies, is illustrated in highly schematic form in Fig. 6. A typical gyrotron comprises a filament F heating a cathode K for emitting electrons. The electrons are accelerated in the acceleration chamber past a body electrode B to reach the resonance cavity. The electrons finally hit a collector C, which is typically kept at a lower potential than the body electrode to decelerate the electrons ("depressed collector"). In addition, a separate anode (not shown) may be provided between the cathode K and the body electrode B and may be used to modulate the intensity of the electron beam independently of the body voltage. Several power supplies are employed to operate the gyrotron. A filament power supply FPS powers the filament F. A cathode power supply MPS provides a negative voltage between the collector C and the cathode K, this voltage typically being in the range of several tens of kilovolts. A body power supply BPS provides a positive voltage, which is also typically in the range of a few tens of kilovolts, between the body electrode B and the collector C. The body-collector path of the gyrotron represents a highly capacitive load. Other configurations of electrodes and power supplies have been suggested, which however need not be discussed here.

For modulating the beam voltage, the modulator of the present invention may be employed, as illustrated in Fig. 6. The switching elements are implemented as MOSFETs $Q_1$, $Q_2$, $Q_3$ and $Q_4$ with integrated freewheeling diodes $D_1$-$D_4$. An additional, relatively small series resistor $R_s$ between the modulator and the body electrode acts to limit the maximum current in case of any failures.

In a similar manner, the modulator of the present invention may be employed to modulate the voltage at a control electrode (e.g., anode or gate electrode) of any other vacuum tube, e.g., of a klystron.

It may be remarked that similar circuit topologies as the topologies suggested in the present invention have been employed in the prior art in connection with so-called zero-voltage switching schemes for inductive loads in switching power supplies. Several examples of such schemes are described, e.g., in EP 1 748 539, US 5,198,969, US 6,507,500 and US 7,796,405. Quite obviously the concepts underlying the present invention and the mode of operation of the present invention are very different from such schemes. In particular, in the present invention the load is capacitive, while in the zero-voltage switching schemes of the prior art the load (the primary winding of a transformer) is highly inductive. Furthermore, in such schemes a transfer of energy back into the voltage source is obviously undesired, while in the present invention such an energy transfer is actually desired. Additionally, in both embodiments of the present invention, switches $S_1$ and $S_2$ are generally switched at substantial voltages, while it is the declared purpose of zero-voltage switching schemes to achieve switching at zero voltage. Therefore known zero-voltage switching circuits have little in common with the present invention.

LIST OF REFERENCE SIGNS

| | |
|---|---|
| $C_{load}$ | Load capacitance |
| $R_{load}$ | Load resistance |
| $R_1$, $R_S$ | Series resistor |
| $S_1$-$S_4$ | Switch |
| $Q_1$-$Q_4$ | MOSFET |
| $D_1$-$D_4$ | Diode |
| $L_1$ | Inductance |
| $V_1$ | Supply voltage |
| $V_{out}$ | Output voltage |
| $I_{out}$ | Output current |
| $I_{L1}$ | Inductor current |
| t | time |
| $t_1$-$t_6$ | Point in time |
| 100 | Controller |
| F | Filament |
| K | Cathode |

B        Body

C        Collector

MPS      Main power supply

BPS      Body power supply

FPS      Filament power supply

**Claims**

1.  A modulator for supplying energy to a substantially capacitive load ($C_{load}$, $R_{load}$) from a DC input voltage ($V_1$) in a switched manner, the modulator comprising:

    a first input terminal and a second input terminal for connecting the modulator to the DC input voltage ($V_1$);
    a first half-bridge connected between said first and second input terminals, the first half-bridge comprising a first switching element ($S_1$) and a second switching element ($S_2$) connected in series and defining a first common node;
    a second half-bridge connected between said first and second input terminals, the second half bridge comprising a first diode ($D_3$) and a second diode ($D_4$) connected in series and defining a second common node, both diodes being connected in reverse direction relative to the DC input voltage;
    an inductor ($L_1$) connected between the first common node and the second common node; and
    a capacitive load ($C_{load}$, $R_{load}$) connected directly or indirectly to the second common node and the second input terminal.

2.  The modulator of claim 1, comprising a controller (100) for controlling said switching elements ($S_1$, $S_2$), the controller being configured to carry out a switching sequence comprising the following states:

    first switching element ($S_1$) closed and second switching element ($S_2$) open, to supply a current to the capacitive load through the inductor ($L_1$); and
    second switching element ($S_2$) closed and first switching element ($S_1$) open, to discharge the capacitive load through the inductor.

3.  The modulator of claim 1 or 2, wherein the first diode ($D_3$) is coupled in parallel with a third switching element ($S_3$), and wherein the second diode is coupled in parallel with a fourth switching element ($S_4$).

4.  The modulator of claim 3, comprising a controller (100) for controlling said switching elements ($S_1$, $S_2$, $S_3$, $S_4$), the controller being configured to carry out a switching sequence comprising the following states:

    (a) second, third and fourth switching elements ($S_2$, $S_3$, $S_4$) open and first switching element ($S_1$) closed, to charge the capacitive load through the inductor ($L_1$);
    (b) fourth switching element ($S_4$) open, at least one of the first and second switching elements ($S_1$, $S_2$) open, and third switching element ($S_3$) closed, to connect the capacitive load to the input voltage while bypassing the inductor ($L_1$);
    (c) first, third and fourth switching elements ($S_1$, $S_3$, $S_4$) open and second switching element ($S_2$) closed, to discharge the capacitive load through the inductor ($L_1$) and through the second switching element ($S_2$);
    (d) third switching element ($S_3$) open, at least one of the first and second switching elements ($S_1$, $S_2$) open, and fourth switching element ($S_4$) closed, to short-circuit the capacitive load through the fourth switching element ($S_4$).

5.  The modulator of claim 4, wherein the controller is configured to open the first switching element prior to step (b), simultaneously with step (b), or during step (b) to de-energize the inductor ($L_1$) under action of the inverse input voltage ($V_1$).

6.  The modulator of claim 4 or 5, wherein the controller is configured to open the second switching element prior to step (d), simultaneously with step (d), or during step (d) to de-energize the inductor ($L_1$) under action of the input voltage ($V_1$).

7.  A modulator for supplying energy to a substantially capacitive load ($C_{load}$, $R_{load}$) from a DC input voltage ($V_1$) in a switched manner, the modulator comprising:

    a first input terminal and a second input terminal for connecting the modulator to the DC input voltage ($V_1$);
    a first half-bridge connected between said first and second input terminals, the first half-bridge comprising a first switching element ($S_1$) and a second switching element ($S_2$) connected in series and defining a first common node;
    a second half-bridge connected between said first and second input terminals, the second half bridge comprising a third switching element ($S_3$) and a fourth switching element ($S_4$) connected in series and defining a second common node;
    an inductor ($L_1$) connected between the first common node and the second common node;

a first output terminal connected to the second common node, and a second output terminal connected to the second input terminal, for connecting a capacitive load ($C_{load}$, $R_{load}$) to the modulator, and
a controller (100) for controlling said switching elements ($S_1$, $S_2$, $S_3$, $S_4$), the controller being configured to carry out a switching sequence comprising the following states:

(a) second, third and fourth switching elements ($S_2$, $S_3$, $S_4$) open and first switching element ($S_1$) closed, to charge the capacitive load through the inductor ($L_1$);
(b) fourth switching element ($S_4$) open, at least one of the first and second switching elements ($S_1$, $S_2$) open, and third switching element ($S_3$) closed, to connect the capacitive load to the input voltage while bypassing the inductor ($L_1$);
(c) first, third and fourth switching elements ($S_1$, $S_3$, $S_4$) open and second switching element ($S_2$) closed, to discharge the capacitive load through the inductor ($L_1$) and through the second switching element ($S_2$);
(d) third switching element ($S_3$) open, at least one of the first and second switching elements ($S_1$, $S_2$) open, and fourth switching element ($S_4$) closed, to short-circuit the capacitive load through the fourth switching element ($S_4$).

8. The modulator of claim 7, wherein the controller is configured to open the first switching element prior to step (b), simultaneously with step (b), or during step (b) to de-energize the inductor ($L_1$) under action of the inverse input voltage ($V_1$).

9. The modulator of claim 7 or 8, wherein the controller is configured to open the second switching element prior to step (d), simultaneously with step (d), or during step (d) to de-energize the inductor ($L_1$) under action of the input voltage ($V_1$).

10. A method of supplying energy to a substantially capacitive load ($C_{load}$, $R_{load}$) from a DC input voltage ($V_1$) in a switched manner, the method comprising:

(i) connecting an inductor ($L_1$) in series with the load ($C_{load}$, $R_{load}$) to provide a series resonance circuit;
(ii) at a first predetermined point in time, applying the input voltage to said series resonance circuit to supply a current to the load ($C_{load}$, $R_{load}$) through the inductor ($L_1$);
(iii) when the voltage across the load ($C_{load}$, $R_{load}$) exceeds a first predetermined voltage, redirecting at least a portion of the inductor current away from the load ($C_{load}$, $R_{load}$).

11. The method of claim 10, further comprising:

(iv) at a second predetermined point in time, discharging the load ($C_{load}$, $R_{load}$) through the inductor ($L_1$); and
(v) when the voltage across the load ($C_{load}$, $R_{load}$) falls below a second predetermined voltage lower than the first predetermined voltage, redirecting at least a portion of the inductor current away from the load ($C_{load}$, $R_{load}$) to keep the voltage across the load substantially at the second predetermined voltage.

12. The method of claim 11,
wherein in step (ii) the series circuit is connected to the input voltage ($V_1$) by means of a first switching element ($S_1$), and
wherein in step (iv) the load is discharged through the inductor ($L_1$) by means of a second switching element ($S_1$) which substantially short-circuits the series circuit.

13. The method of claim 11 or 12,
wherein in step (iii) the inductor current is redirected by a first diode ($D_3$) which enters its conducting state due to the voltage across the load reaching or exceeding the predetermined voltage, and
wherein in step (v) the inductor current is redirected by a second diode ($D_4$) which enters its conducting state due to the voltage across the load becoming negative,
the first and second diodes ($D_3$, $D_4$) being reverse-biased during steps (ii) and (iv).

14. The method of any of claims 11-13, wherein in step (iii) the inductor ($L_1$) is de-energized under action of the inverse input voltage ($V_1$) and/or in step (v) the inductor ($L_1$) is de-energized under action of the input voltage ($V_1$).

15. The method of any of claims 11-14,
wherein in step (iii) a third switching element ($S_3$) is closed to connect the load ($C_{load}$, $R_{load}$) to the input voltage, and
wherein in step (v) a fourth switching element ($S_4$) is closed to substantially short-circuit the load ($C_{load}$, $R_{load}$).

16. The method of any of claims 10-15, wherein the load ($C_{load}$, $R_{load}$) comprises the control electrode of a vacuum tube, in particular, the anode-collector path or the body-collector path of a gyrotron or klystron.

FIG. 1
(Prior Art)

FIG. 2

FIG. 3

FIG. 4

FIG. 5

FPS

F

K

D₁  Q₁     D₃  Q₃

BPS

MPS

D₂  Q₂     D₄  Q₄

L₁

R_S

B

C

100

**FIG. 6**

Europäisches
Patentamt

European
Patent Office

Office européen
des brevets

# EUROPEAN SEARCH REPORT

Application Number

EP 11 15 0371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 366 063 B1 (SEKII YOSHIZUMI [JP]) 2 April 2002 (2002-04-02) | 1-9 | INV. H02M7/5387 |
| Y | * figures 10,11 * <br> * column 8, lines 11-16,21-27 * <br> * column 8, line 35 - column 9, line 13 * <br> ----- | 10-16 | |
| Y | JP 61 132997 A (HEWLETT PACKARD YOKOGAWA HEWLETT PACKARD CO) 20 June 1986 (1986-06-20) * figure 1 * & US 4 707 692 A (HIGGINS MARVIN L [US] ET AL) 17 November 1987 (1987-11-17) * figure 3 * * column 3, lines 46-68 * <br> ----- | 10-16 | |
| Y | WO 2008/099328 A2 (PHILIPS INTELLECTUAL PROPERTY [DE]; KONINKL PHILIPS ELECTRONICS NV [NL]) 21 August 2008 (2008-08-21) * abstract * * figure 1 * * claim 8 * <br> ----- | 16 | |

TECHNICAL FIELDS
SEARCHED (IPC)

H02M

The present search report has been drawn up for all claims

| Place of search | Date of completion of the search | Examiner |
|---|---|---|
| Munich | 17 June 2011 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 11 15 0371

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2011

| Patent document cited in search report | | Publication date | Patent family member(s) | | Publication date |
|---|---|---|---|---|---|
| US 6366063 | B1 | 02-04-2002 | NONE | | |
| JP 61132997 | A | 20-06-1986 | JP | 2033215 C | 19-03-1996 |
| | | | JP | 5081912 B | 16-11-1993 |
| | | | US | 4707692 A | 17-11-1987 |
| WO 2008099328 | A2 | 21-08-2008 | CN | 101611537 A | 23-12-2009 |
| | | | EP | 2122818 A2 | 25-11-2009 |
| | | | US | 2010038973 A1 | 18-02-2010 |

EPO FORM P0459

For more details about this annex : see Official Journal of the European Patent Office, No. 12/82

**REFERENCES CITED IN THE DESCRIPTION**

**Patent documents cited in the description**

- EP 1748539 A
- US 5198969 A
- US 6507500 B
- US 7796405 B